# EUROPEAN PATENT APPLICATION

(11) **EP 1 726 916 A1**
(43) Date of publication of application: **29.11.2006**
(21) Application number: 05425382.8
(22) Date of filing: 27.05.2005
(51) Int. Cl.: G01C 21/34

(54) **An off-board navigation system for vehicles**

(71) Applicant: C.R.F. Società Consortile per Azioni, 10043 Orbassano (TO) (IT)
(72) Inventor: Liberto, Carlo, c/o C.R.F. S.C.p.A., 10043 Orbassano (IT); Lilli, Francesco, c/o C.R.F. S.C.p.A., 10043 Orbassano (IT)
(74) Representative: Cerbaro, Elena

(57) **Abstract**

Described herein is an off-board navigation system for vehicles, comprising at least one operating centre (2) and at least one on-board navigation unit (4) installed on board a vehicle (3), in which the operating centre is provided with monitoring means (10, 70) for detection of events that modify the road conditions of a route previously calculated and with means for calculating a route (80) alternative to the one affected by poor road conditions, which are in any case communicated to the user and in which the data regarding the alternative route are transmitted (140) to the on-board navigation unit upon request of the user.

## Description

The present invention relates to an off-board navigation system for vehicles.

As is known, navigation systems for vehicles have the primary function of supplying the driver of the vehicle with a set of information of a graphic and/or vocal type on a route to follow in order to reach a selectable destination in an optimal way.

The above systems are basically made up of: a unit for receiving radio signals coming from satellites forming part of a satellite positioning system, for example GPS; a calculation unit, which calculates the position of the vehicle on the basis of the signal received from the satellite positioning system; and a user interface, which has the main task of supplying the driver of the vehicle with information of a graphic and/or vocal nature on the route. The user interface is used in the off-board navigation system for entry of the data necessary for calculating the route.

Amongst the navigation systems offered by the principle automobile manufacturers, navigation systems of an on-board type are known, in which calculation of the route requested by the user is made directly on board the vehicle by a purposely provided calculation unit, and navigation systems of an off-board type, in which the calculation of the route requested by the user is made externally to the vehicle.

In particular, in off-board navigation systems the calculation of the route comprised between the current position of the vehicle and the destination that the user wishes to reach is made by an operating centre in communication with the vehicle and transmitted through the latter to the navigation system integrated on board the vehicle, which receives the data calculated by the operating centre and supplies the driver with the graphic and/or vocal instructions on the route to follow.

The main advantage of off-board navigation systems is to achieve an essential simplification of the navigation system integrated on board the vehicle in so far as, thanks to a structure of a "hybrid" type, the calculation unit of the on-board navigation system just calculates the position of the vehicle but does not implement the algorithms necessary for the calculation of the routes, nor does it require all the data-support units necessary for storage of the cartographic maps.

It is clear how in this way a considerable reduction in the costs of construction of the on-board navigation system is achieved.

Another advantage of off-board navigation systems consists in the fact that updating of the information of a geographical nature used for calculating the routes requested by the user is made at the appropriate rate directly from the operating centre, thus exempting the user from this task. This guarantees the supply of a constantly efficient service, the reliability of which is not affected by possible errors deriving from the lack of updating of the information of a geographical character by the user.

Currently, navigation systems for vehicles constitute a commercial product that is undergoing a marked growth both on account of the need, on the part of automobile manufacturers, to mark themselves off from one another in the offer of vehicles equipped with technological systems that are increasingly advanced, and on account of the new requirements of mobility of drivers, who move around in scenarios that are increasingly complex and require an increasingly larger amount of different information. This has led to the development of navigation systems of a "dynamic" type, which do not simply supply the driver of the vehicle with a set of instructions on how to reach a pre-set destination but which are also able to supply the user with additional information, such as, for instance, information on traffic, or on points of particular interest along the route being travelled.

The German patent application No. DE 101 05 449, for example, describes a navigation system for vehicles and a method of updating the data regarding a road route stored in said navigation system and, in particular, in an off-board navigation system, in which the information on the route is updated by an operating centre in the case where the driver of the vehicle signals to the operating centre the occurrence of an event that causes a variation in the traffic conditions present on the pre-chosen route. Following upon said signalling made by the user, the operating centre calculates an alternative route and sends it to the navigation system on board the vehicle.

The aim of the present invention is to provide a system and a method of off-board navigation that further improves the known navigation systems.

According to the present invention, an off-board navigation system is provided, as defined in Claim 1.

For a better understanding of the present invention there is now described a preferred embodiment thereof, which is presented purely by way of non-limiting example, with reference to the attached plate of drawings, wherein:
- Figure 1 illustrates an off-board navigation system forming the subject of the present invention; and
- Figure 2 presents a flowchart of the method implemented by the off-board navigation system of the present invention.

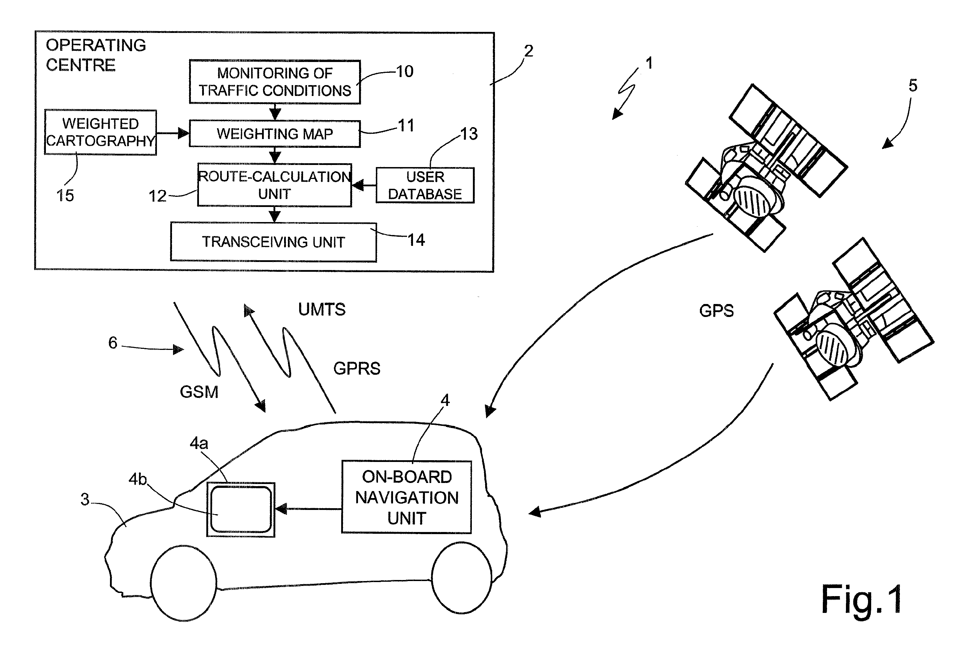

As illustrated in Figure 1, the off-board navigation system 1 forming the subject of the present invention comprises: at least one operating centre 2, an on-board navigation unit 4, installed on board a vehicle 3; a satellite positioning system 5 of a known type, for example GPS, which co-operates with the on-board navigation unit 4; and a bi-directional mobile communication network 6 of a known type, for example GSM, GPRS or UMTS, located between the operating centre 2 and the vehicle 3.

The vehicle 3 of Figure 1 is moreover provided with sensors of a known type (not illustrated in the figure), which are connected to the on-board navigation unit 4 and supply at output signals indicating the speed and direction of travel of the vehicle 3, for example an odometer and a gyroscope.

In particular, once again with reference to Figure 1, the on-board navigation unit 4 is provided with means for receiving radio signals (not illustrated in the figure) transmitted by the GPS satellite positioning system 5 and is configured for calculating the current position of the vehicle on the basis of the aforesaid signals coming from the GPS satellite positioning system 5.

The on-board navigation unit 4 is able to calculate the position of the vehicle even when the vehicle is located in areas not reached by the signals coming from the GPS satellite positioning system. For this purpose, the on-board navigation unit 4 is configured for implementing a known algorithm of the dead-reckoning type, which calculates the position of the vehicle 3 on the basis of the speed and direction of travel of the vehicle 3, supplied to the on-board navigation unit 4 by the signals coming from the odometer and the gyroscope, and on the basis of the last position calculated according to the signals coming from the GPS satellite positioning system.

The on-board navigation unit 4 is moreover provided with means of a known type (not illustrated in the figure) for the transmission and reception of radio signals that enable a bi-directional exchange of data with the operating centre 2 through the mobile communication network 6.

In particular, the on-board navigation unit 4 comprises at least one user interface 4a (illustrated schematically) provided with a display 4b, which enables the user to perform all the operations necessary for use of the off-board navigation system 1.

For example, the user can enter the data of a target destination or else enter commands (detailed hereinafter) for communication with the operating centre 2. Said data and said commands are issued according to the usual modalities envisaged in the sector, for example by the use of a graphic interface and a pull-down menu presented on the display 4b.

Once again with reference to Figure 1, the operating centre 2 comprises:
- at least one monitoring system 10 of a known type, which constantly monitors (by means of techniques of a known type) the traffic and road conditions of the road network of a portion of territory, for example in relation to the freedom of access to road routes, the weather conditions, possible road works in progress, or the conditions of the road surfaces; and
- at least one data base 15 containing information of a cartographic nature regarding a plurality of routes present on the territory; said routes are of a "weighted" type; i.e., each route is divided into stretches distinguished by a weight that indicates the characteristics of practicability of the stretch; for example, the weight summarizes characteristics of practicability that take into account various physical characteristics of the route such as, for example:
   ~ the number of lanes of the carriageway;
   ~ the width of the stretch of road;
   ~ the incline;
   ~ the amount and types of curves or straight stretches of road present along the route;
- at least one data base 13 containing information on the identity and class of the users of the off-board navigation system 1;
- at least one weighting map 11, in which associated to the stretches of road monitored by the monitoring system 10 in relation to the current traffic and road conditions are the "weights" indicating the characteristics of practicability of the stretches of routes stored in the data base 15 for calculating a global weight that takes into account both the characteristics of practicability of the stretch and the traffic and road conditions; in particular, by means of said global weight it is possible to express the actualized average time of travel along a route;
- at least one calculation unit 12, which receives at input the information regarding the global weight and has the task of calculating routes following upon a request coming from the navigation unit 4; and
- means 14 of transmission and reception of radio signals for bi-directional data transmission between the operating centre 2 and the on-board navigation unit 4.

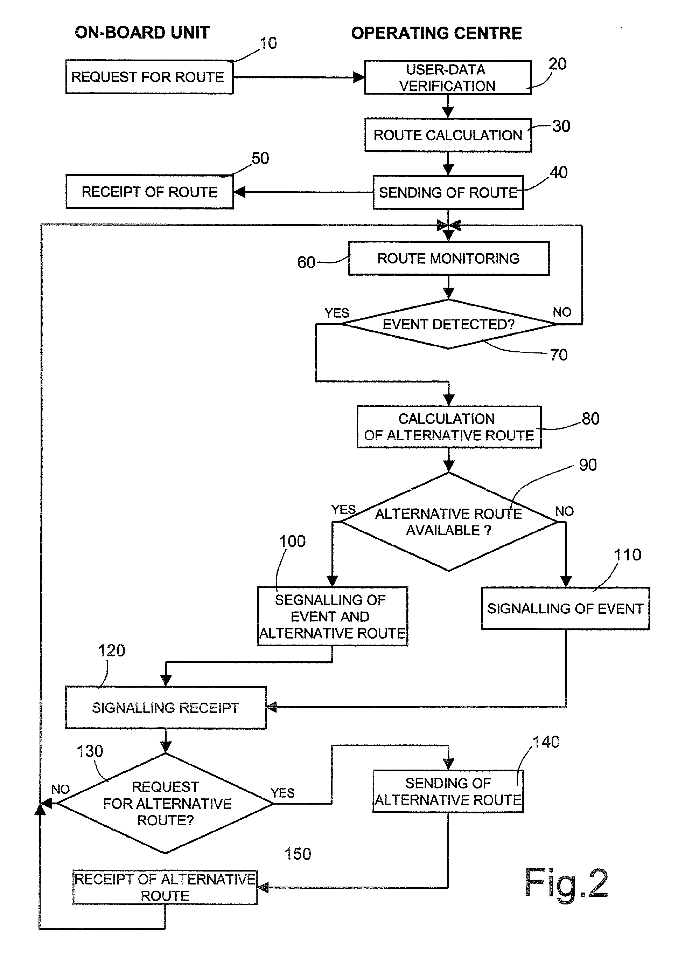

Figure 2 shows a flowchart of the method implemented by the off-board navigation system of the present invention.

According to the method implemented by the off-board navigation system of the present invention, when a user requires information regarding a new route, he enters, through the user interface 4a of the on-board navigation unit 4, the target destination and the type of route that he wishes to cover, for example upon the basis of the time of travel or upon the basis of the costs, and sends the request, together with the current position of the vehicle and its identification data, to the operating centre 2, through the mobile network 6 (block 10).

When the operating centre 2 receives the request coming from the user, it verifies that the identification data sent by the user correspond to those stored in the data base 13 (block 20) and, in the case where the user is enabled to receive the services offered by the operating centre 2, calculates the best route possible on the basis of the user requests (block 30 following upon block 20).

In particular, the calculation of block 30 is made on the basis of:
∼ the information supplied by the weighting map 11, which expresses a plurality of global weights; and
∼ the user requests that express a target destination and a type of route.

The data representing the route calculated by the calculation unit 12 are then sent by the transceiving unit 14 of the operating centre 2 to the on-board navigation unit 4 via the mobile communication network 6 (block 40 following upon block 30).

The user then receives said data (block 50), which are presented in graphic and/or vocal form on the display 4b; in this way, the user can start his trip towards the destination represented following the route indicated in a remote way.

The operating centre 2 then continues to monitor the traffic and road conditions of the route travelled along by the user until he has reached the pre-set destination (block 60).

In particular, if during said monitoring step the operating centre 2 detects the occurrence of an event (block 70 following upon block 60) that modifies the road conditions of the route (in particular, reduces their quality) along a stretch of road not yet reached by the user, the operating centre 2 tries to calculate an alternative route (block 80 following upon block 70) to the one currently in use.

In particular, after making the calculation of the alternative route (block 80) the effective availability of said route is verified (block 90 following upon block 80).

Should said route be available (output YES from block 90), block 90 is followed by a block 110, which commands sending of data for signalling to the user the existence of an alternative route (block 110 following upon block 90) and the event that has modified the road conditions of the route.

Should said route not be available (output NO from block 90), block 90 is followed by a block 100, which commands sending of data for signalling to the user an event that has modified the road conditions of the route indicating the lack of an alternative route.

Block 100 is, for example, selected when there effectively do not exist other routes that take to the chosen destination either because the possible alternative route is not compatible with the requirements of the user or because it is not sufficiently convenient as compared to the one being used.

Blocks 100, 110 are followed by a block 120 (receipt of signalling) and by a block 130, which verifies, in the case where the flow proceeds from block 110, whether a user request for an alternative route is present. If it is not, block 130 is followed by block 60; otherwise (i.e., in the case where the user has requested the alternative route), block 130 is followed by a block 140, which sends to the user the alternative route calculated by block 80.

In the case where the user has not requested the alternative route (i.e., in case of passage from block 130 to block 60), the operating centre 2 does not send the user further indications regarding the event already highlighted. The subsequent signalling to the user of the availability of an alternative route by the operating centre 2 will come about upon occurrence of an event subsequent to the one previously indicated.

The data representing a route are received and ???displayed (block 150 following upon block 140). Block 150 is followed by block 60.

The off-board navigation system 1 of the invention can envisage at least one modality of operation which enables the user to signal to the operating centre 2 that he does not wish to receive the alternative route that is proposed.

In particular, according to a first modality of operation, the off-board navigation system 1 of the invention can be configured in such a way that the user has to send to the operating centre 2 a message of refusal of the proposal of an alternative route via a purposely provided key present on the on-board navigation unit 4.

In a second mode of operation, the off-board navigation system 1 of the invention can be configured in such a way that it is sufficient for the user simply to ignore the proposal of an alternative route coming from the operating centre 2, without performing any operation on the on-board navigation unit 4. In this case, the operating centre 2 interprets the lack of response on the part of the user as a refusal in regard to the proposal of a new route.

Finally, it is clear that modifications and variations can be made to the system described and illustrated herein, without thereby departing from the sphere of protection of the present invention, as defined in the annexed claims.

## Claims

1. An off-board navigation system for vehicles, comprising at least one operating centre (2) and at least one on-board navigation unit (4) installed on board of a vehicle (3), which communicates with said operating centre (2) and can be used by a user for setting target destinations;
said operating centre comprising a calculation unit (12), which receives a user request and is designed to calculate, in response, a route on the basis of the information regarding the vehicle position and on the basis of geographical data present in the operating centre itself,
- said off-board navigation system being **characterized in that** the operating centre is provided with monitoring means (10, 70) designed to detect at least one event that modifies the road conditions of said calculated route;
- said operating centre (2) being moreover provided with means for calculating an alternative route (80), designed to calculate, following upon detection of said event, at least one road route alternative to said calculated route;
- the data representing said alternative route being transmitted (140) and being supplied at output (150) by the on-board unit, which has in use the route for which said event has been detected.

2. The system according to Claim 1, in which means of acceptance (130) are provided, which can be activated by the user and are designed to detect a user request for an alternative route; said means of acceptance (130), in the presence of said request, being designed to activate sending means (140) designed to supply the user with said alternative route.

3. The off-board navigation system for vehicles according to Claim 1, in which said monitoring means (10) are designed to monitor constantly the traffic and road conditions of the road network of a portion of territory;
said system further comprising at least one data base (15) containing information of a cartographic character regarding a plurality of routes present on the territory.

4. The system according to Claim 3, in which each route supplied by said data base (15) is divided into stretches distinguished by a weight that indicates characteristics of practicability of the stretch, for example characteristics of a physical nature.

5. The system according to Claim 4, in which at least one weighting map (11) is provided, which co-operates with said data base and with said monitoring means for calculating a global weight that takes into account both said characteristics of practicability of the stretch and said traffic and road conditions.
